# EUROPÄISCHE PATENTSCHRIFT

(11) **EP 1 645 600 B1**
(45) Veröffentlichungstag und Bekanntmachung des Hinweises auf die Patenterteilung: **12.12.2007**
(21) Anmeldenummer: 05021965.8
(22) Anmeldetag: 07.10.2005
(51) Int. Cl.: C09C 3/06, C08K 9/02

(54) **Kornartiger elektrisch leitfähiger Füllstoff für Kunststoffe**
A granular electrically conductive filler for plastics
Charge électriquement conductrice granulaire pour plastiques

(30) Priorität: 07.10.2004 DE 102004048815
(43) Veröffentlichungstag der Anmeldung: 12.04.2006
(73) Patentinhaber: bene_fit GmbH, 92242 Hirschau (DE)
(72) Erfinder: Kräuter, Reinhard, 92237 Sulzbach-Rosenberg (DE); Van Herzele, Peter, 90402 Nürnberg (DE)
(74) Vertreter: Hannke, Christian

(56) Entgegenhaltungen:
- EP-A- 0 373 575
- EP-A- 0 415 478
- EP-A- 0 586 003
- DE-A1- 4 213 747
- DE-A1- 4 237 355
- DE-A1- 10 051 872

## Beschreibung

Die Erfindung betrifft einen kornartigen Füllstoff für Kunststoffe, Klebstoffe oder Farben zur Erhöhung deren elektrischer Leitfähigkeit mit einer Vielzahl an Trägerkörnem gemäß dem Oberbegriff des Patentanspruches 1.

Häufig werden Bauteile oder Werkstoffe benötigt, die eine gute elektrische Leitfähigkeit aufweisen und somit auch eine abschirmende Wirkung hinsichtlich elektromagnetischer Strahlung zu Eigen haben. Hierzu werden häufig elektrisch leitfähige Materialien, wie Graphit, Metallzusätze, Leitruss, organische Zusätze oder hybride Werkstoffe in thermoplastischen oder duroplastischen Kunststoffen miteingesetzt, um deren elektrische Leitfähigkeit als Bauteil oder Werkstoff zu erfüllen. In diesem Zusammenhang ist zu berücksichtigen, dass der überwiegende Teil an Kunststoffen elektrische Isolatoren mit einem spezifischen elektrischen Widerstand von mehr als 10¹⁴ Ω * cm darstellen. Demgegenüber ist das Fließen elektrischen Ladungen erst bei einem spezifischen Widerstand von weniger als 10¹² Ω * cm möglich. Gute antistatische Eigenschaften des Bauteils oder Werkstoffes existieren bei einem spezifischen Widerstand von 10⁶ - 10¹² Ω * cm.

Insbesondere in dem Bereich des spezifischen Widerstandes von 10⁶ - 10⁹ Ω * cm findet ein Übergang vom antistatischen Zustand in den leitfähigen Zustand statt. Halbleitfähige Bauteile oder Werkstoffe weisen somit einen spezifischen Widerstand von 10² - 10⁴ Ω * cm und vollleitfähige Bauteile oder Werkstoffe, wie Metalle, weisen einen spezifischen Widerstand von weniger als 10° Ω * cm, zumeist zwischen 10⁻⁴ - 10⁻⁶ Ω * cm auf.

Elektrisch leitfähige Füllstoffe werden in eine Polymer-Matrix herkömmlicherweise eincoumpoundiert. Eine derartige Einbettung von leitfähigen Füllstoffen in einen Kunststoff hat nicht zur Folge, dass in Abhängigkeit von den Füllstoffgehalt eine proportionale Widerstandsabnahme erreicht werden kann. Vielmehr wird das Verhältnis von elektrisch leitfähigem Füllstoffgehalt zu elektrischem Widerstandswert in einer S-förmigen Kurve, der Perkolationskurve, wiedergegeben. Hieraus ergibt sich, dass ein niedriger Füllstoffgehalt eines in dem Kunststoff homogen verteilten Füllstoffes nicht ausreicht, um die Polymer-Matrix elektrisch leitfähig zu machen. Erst ab einer kritischen Füllstoffkonzentration, der sogenannten Perkolationsgrenze, die von den verwendeten Füllstoffen, dem verwendeten Bindemittel und der angewendeten Einarbeitungsart abhängt, beginnen aufgrund der spontanen Zunahme an gegenseitigen Berührungen der Füllstoffteilchen sich Leiterbahnen auszubilden. Hierbei wird der in diesem Zusammenhang gemessen elektrische Widerstand Rᵥ der Polymer-Matrix in einen relativen Widerstand pᵥ umgerechnet: ρᵥ=R_{V}* A/t mit A als effektive Messfläche und t als Länge zwischen Elektroden.

Bei der Verwendung von Metallpartikein, wie Graphit, Kupferstücke oder Silberstücke in einer Polymer-Matrix müssen zur Erreichung einer elektrischen Leitfähigkeit bis zu 60 Ma% bezogen auf die Gesamtmasse der Polymer-Matrix an Partikeln hinzugefügt werden. Dies hat eine starke Gewichtserhöhung der Bauteile oder Werkstoffe und eine Reduzierung ihrer mechanischen Festigkeiten zur Folge. Zudem führt ein derartig hoher Metallgehalt zu erhöhtem Abrieb von Werkzeugen bei Verarbeitung derartig hergestellter Bauteile oder Werkstoffe und zu hohen Zusatzkosten.

Alternativ kann Russ in einer Konzentration von 5 bis 35 Ma% bezogen auf die Masse der Polymer-Matrix verwendet werden. Eine elektrische Leitfähigkeit derartig hergestellter Bauteile oder Werkstoffe wird dadurch erreicht, dass die homogene Verteilung der leitfähigen Russpigmente gestört wird. Dies kann zum einen durch Sinterung anstelle von thermoplastischer Herstellung und zum anderen durch das Einarbeiten weiterer Komponenten, die gegenüber dem leitfähigen Russpigmenten und/oder der Polymer-Matrix rheologische Unterschiede aufweisen, erfolgen. Russ enthaltende Polymer-Matritzen sind in ihrer Farbe immer schwarz.

Weiterhin ist die Behandlung von Kunststoffen mit aggressiven Stoffen, Dotierung genannt, bekannt, bei der die Elektronen längs der Polymerketten transportiert werden. Durch den hierdurch erreichten Einbau von Konjugationsfehlern in die Polymerkette, die die Abfolge von Einfach- und Doppelbindungen In einer nicht leitenden Polymerkette unterbrechen lassen, entstehen freie Elektronen, die längs der Polymerkette transportiert werden. Derartige Kunststoffe benötigen keinen Zusatz von leitfähigen Füllstoffen. Beispiele für solche auch als intrinsisch leitende Kunststoffe genannte Materialien sind Polyanilin, Polyacetylen und Polythiophen. Beispielsweise wird durch Beschichtung von Talkum mit Polyanilin eine Leitfähigkeit von etwa 2,9 S/cm, also einen spezifischen Widerstand von 0,34 Ω* cm erhalten.

Derartige intrinsisch leitende Kunststoffe sind jedoch kostenintensiv in ihrer Herstellung und verringem die mechanischen Eigenschaften der daraus hergestellten Endprodukte. Zudem sind derartige intrinsisch leitende Kunststoffe schwer löslich und unschmelzbar, da die freien Elektronen der Konjugatlonsfehler auch eine bestimmte Vernetzung verursachen, die eine thermoplastische Verbindung unmöglich machen. Deswegen müssen derartige Polymere in situ polymerisiert werden, wie es in EP 0 298 746 beschrieben wird.

Zudem sind die elektrischen Leitfähigkeltswerte derartiger intrinsisch leitenden Polymere nicht stabil, da die Anzahl an frelen Elektronen unter Einfluss von Licht und Sauerstoff für gewöhnlich abnimmt.

Somit liegt der vorliegenden Erfindung die Aufgabe zugrunde, einen komartigen Füllstoff für Kunststoffe, Klebstoffe oder Farben zur Erhöhung deren elektrischer Leitfähigkeit mit einer Vielzahl an Trägerkömem zur Verfügung zu stellen, der einen hohen elektrischen Leitfähigkeitswert bezogen auf das Ihn enthaltende Endprodukt, eine einfache und kostengünstige Herstellung und ein niedriges Gesamtgewicht des ihn enthaltenden Endproduktes sowie die Beibehaltung guter mechanischer Eigenschaften des Endproduktes ermöglicht.

Diese Aufgabe wird gemäß den Merkmalen des Patentanspruches 1 gelöst.

Ein wesentlicher Punkt der Erfindung liegt darin, dass ein kornartiger Füllstoff für Kunststoffe, Klebstoffe oder Farben zur Erhöhung deren elektrischer Leitfähigkeit eine Vielzahl an Trägerkömer aufweist, die an Ihren Oberflächen jeweils eine zumindest teilweise geschlossene Mantelschicht aus elektrisch leitfähigen Pigmenten mit einem auf die Masse der Trägerkörner bezogenen Masseanteil von 0,5 bis 6 Ma% aufweist, wobei ein spezifischer elektrischer Pulverwiderstand des komartigen Füllstoffes aus den beschichteten Trägerkömem aus einem Bereich von 10⁶ bis 10⁹ Ω * cm herausgegriffen ist. Dies führt zu einer Erhöhung der elektrischen Leitfähigkeit der diese Füllstoffe enthaltenden Endprodukt, ohne dass die mechanische Festigkeit maßgeblich beeinträchtigt wird.

Durch die Anordnung der elektrisch leitfähigen Pigmente an der Oberfläche der Trägerkörner, welche aus einem Material wie Aluminiumsilikat, Quarz, Glasfaser, Wollastonit, Glimmer, Kalziumkarbonat und/oder Talkum bestehen können, wird im Gegensatz zu der direkten Einbettung von elektrisch leitfähigen Pigmenten in den Kunststoff eine effektivere Ausbeutung des Beitrags der einzelnen Pigmente zu der elektrischen Leitfähigkeit erreicht. Denn es sind bei der Oberflächenanordnung in Form einer Mantelschicht vergleichsweise wenig Pigmente notwendig, um eine elektrische Leitfähigkeit durch Berührung der Pigmentteilchen, die an der Oberfläche der Trägerkömer liegen, zu erhalten. Somit findet eine wesentlich geringere Gewichtszunahme des Endproduktes durch Umwandlung beispielsweise eines Polymerkunststoffes von einem nicht leitfähigen in einen leitfähigen Kunststoff statt.

Aufgrund der geringen Menge an benötigten elektrisch leitfähigen Füllstoffen wird zudem eine Kostenersparnis und eine einfache Herstellung des Kunststoffes erzielt.

Die Beschichtung der Oberflächen der Trägerkörner kann entweder mechanisch erfolgen, indem eine partielle Druckbehandlung unter Einwirkung hoher mechanischer Reibungsenergie und sich hieraus ergebender hoher Temperaturen, gegebenenfalls in einer Schutzgasatmosphäre, durchgeführt wird, wobei die zugegebenen elektrisch leitfähigen Pigmente in einem derartigen Behandlungsverfahren delaminiert bzw. erweicht bzw. geschmolzen werden. Hierdurch werden die Trägerkömer mit der dünnen Mantelschicht überzogen und bei metallischen Pigmenten mittels eines Sinterprozesses eine dauerhafte irreversible Verbindung der Metallpigmente mit den Trägerkömer geschaffen.

Oder es können die elektrisch leitfähigen Pigmente, die auch zu einer hohen Wärmeleitfähigkeit der Endprodukte beitragen, mittels eines Klebstoffes oder Bindemittels auf den Oberflächen der Trägerkömer dauerhaft aufgebracht werden. Hierfür werden die elektrisch leitfähigen Pigmente und die Trägerkömer unter Bewegung miteinander vermischt und zugleich ein Bindemittel hinzugegeben. Die Menge an zugegebenen Bindemittel wird danach bemessen, wann die elektrisch leitfähigen Pigmente an den Oberflächen der Trägerkörner zu haften beginnen. Zuviel Bindemittel hingegen würde eine vollständige Abdeckung der elektrisch leitfähigen Pigmente und somit keine elektrische Kontaktierung zwischen den elektrisch leitfähigen Mantelschichten benachbarter Trägerkörner zur Folge haben. Vorteilhafte Mengenangaben für verwendete Bindemittel liegen in einem Bereich von 0,5 bis 3 Ma%, vorzugsweise von 1 bis 2 Ma% bezogen auf die Masse der Trägerkömer. Hierbei können organische Polymere als Bindemittel oder zweikomponentige Polyurethanmischungen verwendet werden.

Derartige Bindemittelverrnischungsverfahren erweisen sich aufgrund ihrer einfachen Ausführung, der notwendigen wenigen Rohstoffen und dem geringen Energieverbrauch als sehr kostengünstig. Üblicherweise wird das Bindemittel erst nach Vermischung der Trägerkömer, wie Quarzkömer, mit den elektrisch leitfähigen Pigmenten hinzugegeben. Es kann sich hierbei um organische oder anorganische Bindemittel handeln. Ein Beispiel für die zweikomponentige Polyurethanmischung ist ein Polyol/Isozyanat-Gemisch gegebenenfalls mit einem Katalysator, welches sich als vorteilhaft gegenüber einem Einkomponentensystem erweist.

Gemäß einer bevorzugten Ausführungsform der Erfindung weist die Mantelschicht zusätzlich elektrisch isolierende Farbpigmente mit einem auf die Masse der Trägerkömer bezogenen Masseanteil von bis zu 4 Ma% auf. Derartige Farbpigmente können zum Erhalt eines Farb- bzw. Dekorationseffektes nach der Zugabe der elektrisch leitfähigen Pigmente oder zeitgleich als Gemisch hinzugegeben werden. Bevorzugt werden hierbei Farbpigmentanteile von 0,5 bis 3 Ma% zur Erhaltung einer hellen oder kräftigen Farbe verwendet Der hierbei verwendete Bindemittelanteil beträgt abhängig von der Farbpigmentmenge und der elektrischen leitfähigen Pigmentmenge vorzugsweise einen Wert aus 0,5 bis 3 Ma%. Beispielsweise ist bei einer Pigmentmenge von 2 bis 4 Ma% eine Bindemittelmenge von 1 bis 2 Ma% optimal. Mehr als 6 Ma% an gesamter Pigmantmange ist nicht vorteilhaft, da aufgrund des hierdurch entstehenden hohen Bindemittelbedarfes die Stabilität der Füllstoffkörner zurückgeht.

Gemäß einer bevorzugten Ausführungsform kann es sich bei der elektrisch leitfähigen Pigmenten zumindest teilweise um Titandioxid, gegebenenfalls Im modifizierten Zustand, handein. Derartige Titandioxidpigmente können zumindest teilweise eine Mantelschicht aus Antimondotierten Zinnoxid aufweisen. Hierdurch wird eine hoher elektrische Leitfähigkeitswert erreicht.

Nachfolgend wird die Erfindung anhand von Beispielen näher dargestellt:

### Beispiel 1 (nicht gemäß der Erfindung)

Zur Beschichtung von kalziniertem Kaolin als Trägerkömer mit einem Kupferpulver als elektrisch leitfähige Farbpigmente wurden zu Versuchszwecken unterschiedliche Mengen und Typen an Kupferpulver verwendet.

In einer Probenkammer werden 1200 ml kalziniertes Kaolin in einen graduierten 2000 ml Messbecher eingefüllt. Nach direkter Zugabe des Kupferpulvers in dem Messbecher werden die beiden Komponenten innig verrührt und die Probe mit Hilfe des beiliegenden Stahltrichters in die Mischkammer einer Beschichtungsvorrichtung gegeben.

In einem Homogenisisierungs- und Vordispergierungsachritt wird das Testgemisch vor dem eigentlichen Besichten direkt In der Probenkammer der Vorrichtung gründlich miteinander vermischt.

In einer sich anschließenden Beschichtungsphase werden nach Ablauf des Mischvorganges innerhalb der Probenkammer die Beschichtungsbedingungen mit beispielsweise 20 min an Laufzeit, einer sich schnell steigemden Rotorgeschwindlgkeit der Kammer von 20 bis auf maximal 80% eingestellt, um eine konstante Rotorleistung von 1,35 bis 1,45 kW zu erhalten.

In einer sich anschließenden Abkühlphase wird nach Ablauf der eigentlichen Beschichtungszeit die Rotorgeschwindigkeit auf 20% für eine Laufzeit von ca. 10 min herabgesetzt. Anschließend wird die Probenkammer durch ruhigen, langsamen Lauf bis auf 60° C abgekühlt, sodass die Probe entnommen werden kann.

In einem sich anschließenden Entleerungsschritt wird unter eine Auslassöffnung der Vorrichtung ein Metalltopf zu Aufnahme der größten Teils der fertiggemischten kornartigen Füllstoffe nach Erreichen einer Produkttemperatur von ca. 50 - 60° C angeordnet.

In dem sich anschließenden REM-Aufnahmen der hierdurch erhaltenen Füllstoffproben zeigt sich, dass die elektrisch leitfähigen Pigmente sich an den Oberflächen der Trägerkömer befinden und dass die gröberen Trägerkömer die qualitativ bessere Mantelschicht aus Pigmenten aufweisen.

In einem sich anschließenden Testschritt werden die Füllstoffproben mit 10% Polyamit zu Pressformen verpresst, deren spezifischen Durchgangswiderstand (spezifischen Pulverwiderstand) gemäß nachfolgender Tabelle 1 folgende Werte aufweisen:

**Tabelle 1**

| **Probe** | **Trägermaterial** | **Leitfähiges Pigment und Konzentration [%]** | **Widerstand [Ohm * cm]** |
|---|---|---|---|
| 1 | Kalziniertes Kaolin | 50% Cu CH UF 10 (4,5-7 µm) | 3,6 E+17 |
| 2 | Kalziniertes Kaolin | 50% Cu CH UF 20 (7-13 µm) | 1,8 E+8 |
| 3 | Kalziniertes Kaolin | 50% Cu GK 0/50 | 2,7 E+14 |
| 4 | Kalziniertes Kaolin | 50% Goldbronze OFFSET 6127 | 0,5 E+6 |

Der Tabelle 1 ist zu entnehmen, dass ein guter Widerstandwert im Grenzbereich zwischen der Leitfähigkeit und der Ableitfähigkeit eines Stoffes bei der verwendeten Füllstoffprobe 4, nämlich einem kalzinierten Kaolin als Trägerkömer mit 50 % Goldbronze als elektrisch leitfähige Pigmente erhalten werden kann.

Um die elektrische Leitfähigkeit der Füllstoffproben in ihrem Einsatz innerhalb eines Endproduktes zu messen, werden die Füllstoffproben in unterschiedlichen Mengenverhältnissen in eine Polycarbonat-Matrix eingearbeitet. Diese führt zu relativen Volumenwiderstandswerten gemäß nachfolgender Tabelle 2:

**Tabelle 2**

| **Probe** | **Füllgrad [%]** | **Spez. Volumenwiderstand [Ohm.cm]** |
|---|---|---|
| **0** | **0** | **4,1 E+17** |
| **1** | **5,00** | **2,6 E+17** |
| **2** | **6,25** | **1,6 E+17** |
| **3** | **7,00** | **8,5 E+16** |
| **4** | **8,75** | **6,8 E+10** |
| **5** | **10,00** | **1,3 E+8** |
| **6** | **11,25** | **7,1 E+4** |
| **7** | **12,50** | **4,5 E+3** |
| **8** | **13,75** | **11,9** |
| **9** | **15,00** | **46,8** |
| **10** | **17,50** | **123,9** |

Der Tabelle 2 ist zu entnehmen, dass es in einem Bereich von 10 bis 13, 7 Ma% an Füllgrad deutlich eine Perkolation gibt.

### Beispiel 2

Als Trägerkömer werden Quarzkömer mit einer Körnung von 0,1 mm bis 0,5 mm eingesetzt. Diese werden mit bestimmten elektrisch leitfähigen Pigmenten in einer Menge zwischen 0,5 bis 5 Ma% während einer Minute in einem Zwangsmischer miteinander vermischt. Hierbei werden als elektrisch leitfähige Pigmente leitfähig modifiziertes TiO₂, die mit Sb dotiertem SnO₂ beschichtet sind, verwendet.

Anschließend wird eine Bindemittelmenge bestehend aus 34 Teilen Polyol und 64 Teilen Isozyanat mit einem Teile Katalysator und einem Teil Lösemittel hinzugegeben. Die Nassmischzeit beträgt hierbei 5 min. Anschließend erfolgt eine Nachreaktion in einem Zeitraum von 15 min bei einer Temperatur von 80 °C.

Die elektrisch leitfähigen Füllstoffe werden anschließend in 10% Epoxidharz eingestreut. Die elektrische Leitfähigkeit wird entsprechend der DIN EN 61340 gemäß nachfolgender Tabelle 3 gemessen:

**Tabelle 3:**

| leitfähiges Pigment [MA-%] | Farbpigment [MA-%] | Bindemittelmenge [MA-%] | Spez. Widerstand [Ohm.cm] | Farbe |
|---|---|---|---|---|
| 0 | 0 | 0 | 1,9 E+14 | hellgrau |
| 0,5 | 0 | 0,5 | 1,4 E+14 | hellgrau |
| 1,0 | 0 | 0,6 | 4,8 E+12 | hellgrau |
| 1,5 | 0 | 0,7 | 5,2 E+8 | hellgrau |
| 2,0 | 0 | 1,0 | 2,7 E+6 | hellgrau |
| 2,5 | 0 | 1,25 | 6,6 E+4 | hellgrau |
| 3,0 | 0 | 1,50 | 4,3 E+3 | grau |
| 3,5 | 0 | 1,75 | 8,4 E+2 | grau |
| 4.0 | 0 | 2,0 | 9,2 E+1 | dunkelgrau |
| 2,5 | 0,5 (rot) | 1,50 | 8,2 E+6 | dunkelrot |
| 3,5 | 1 (blau) | 2,25 | 3,3 E+3 | dunkelblau |
| 2,0 | 3,5 (gelb) | 2,50 | 1,1 E+8 | hell gelb |
| 2,0 | 1,5 (grün) | 1,75 | 2,9 E+7 | hell grün |
| 2,0 | 4,0 | 2,75 | --- | --- |

Die in dieser Tabelle 3 angegebenen Ma%-Werte beziehen sich auf die Masse der verwendeten Quarzkömer.

Der Tabelle ist deutlich zu entnehmen, dass durch Einstellung der Konzentration an elektrisch leitfähigen Pigmenten ein spezifischer Widerstand im leitfähigen und ableitfähigen Bereich erhalten werden kann. Auch ist durch Zumischen einer bestimmten Konzentration an Farbpigmenten der Erhalt anderer Farben möglich. Bei der Verwendung von bis zu 3,5 Ma% an Farbpigmenten sind helle und kräftige Farben erhältlich.

Werden 6 Ma% oder mehr an Pigmenten, also an elektrisch leitfähigen Pigmenten und Farbpigmenten zusammen, verwendet, können aufgrund des hierdurch zwingend hohen Bindemittelantells keine stabilen Kömer mehr hergestellt werden.

Die Anwendungen derartiger komartiger Füllstoffe liegen bei deren Zumischung in duroplastischer oder thermoplastischer Polymere, Klebstoffe, Farben, Folien oder dergleichen Werkstoffe, wobei hierdurch im Vergleich zu herkömmlichen Leitfähigkeitsmaterialien eine annährend gleiche elektrische und/oder abschirmende Wirkung erzielbar ist. Zudem wird ein niedrigeres Gesamtgewicht, eine verringerte Abrasion und eine Kostenreduzierung sowie eine Verbesserung der mechanischen Festigkeiten erreicht. Derartige komartige Füllstoff sind als funktionelle Füllstoffe für elektrisch ableitfähige Fußböden denkbar. Denn bei der Herstellung von Elektronikbauteilen in der Mikrochipindustrie können bereits geringe Entladungen empfindliche Chips oder Transistoren schädigen. Für diese meist empfindlichen Bauteile genügt schon eine Entladung von 10 V zu deren Zerstörung. Um ein Ableiten derartiger Ladungen in Arbeitsräumen sicherzustellen, muss unter anderem auch der Fußboden, aber auch die Arbeitsflächen, die Möbel und die Kleidung aus ableitfähigem Material bestehen. Elektrostatisch leitende Fußböden weisen gemäß der DIN EN 61340 einen Widerstand von weniger als 10⁶ Ω und ableitfähige Fußböden müssen einen Widerstand von 10⁶ - 10⁹ Ω aufweisen.

Die erfindungsgemäßen komartigen Füllstoffe ermöglichen vorteilhaft die gezielte Einstellung eines bestimmten, gewünschten Widerstandes durch Optimierung der elektrisch leitfähigen Pigmentmenge, die sich an den Oberflächen der Trägerkömer befinden. Dabei sind Widerstandswerte von 10⁸ - 10⁹ Ω bereits mit niedrigen Pigmentmengen möglich. Mit höheren Pigmentmengen sind Widerstandswerte im leitfähigen Bereich ebenso möglich.

Zur Erzielung eines gewünschten Farbeffektes ist es vorteilhaft, dass elektrisch leitfähige Pigmente wie leitfähige modifizierte Titandioxid-Pigmente, welche sich durch eine Beschichtung mit Antimon dotiertem Zinnoxid auszeichnen, verwendet werden, da diese eine helle Farbe aufwelsen.

Weitere Anwendungsmöglichkelten derartiger erfindungsgemäßer komartiger Füllstoffe ergeben sich in Bauteilen und Werkstoffen, die eine Abschirmung von elektrostatischen Feldem, elektrischen oder magnetischen Wachseffeldem, elektromagnetischen Wellen, antistatischen Verpackungen und/oder eine Wärmeableitung in der Mikroelektronik zur Aufgabe haben.

## Patentansprüche

1. Kornartiger Füllstoff für Kunststoffe, Klebstoffe oder Farben zur Erhöhung deren elektrischer Leitfähigkeit mit einer Vielzahl an Trägerkörnern, wobei der komartige Füllstoff einen spezifischen elektrischen Widerstand von 10⁹ Ω * cm oder weniger aufweist,
**dadurch gekennzeichnet, dass**
jedes Trägerkorn aus Quarz besteht und an seiner Oberfläche eine zumindest teilweise geschlossene Mantelschicht aus elektrisch leitfähigen Pigmenten mit einem auf die Masse der Trägerkörner bezogenen Masseanteil von 0,5 bis 6 Ma% und einem Bindemittel zum Binden der elektrisch leitfähigen Pigmente aufweist.

2. Kornartiger Füllstoff nach Anspruch 1,
**dadurch gekennzeichnet, dass**
die Mantelschicht elektrisch isolierende Farbpigmente mit einem auf die Masse der Trägerkörner bezogenen Masseanteil von bis zu 4 Ma% aufweist.

3. Kornartiger Füllstoff nach Anspruch 1 oder 2,
**dadurch gekennzeichnet, dass**
die elektrisch leitfähigen Pigmente zumindest teilweise Titandioxid enthalten.

4. Kornartiger Füllstoff nach Anspruch 3,
**dadurch gekennzeichnet, dass**
die Pigmente aus Titandioxid zumindest teilweise eine Mantelschicht aus antimondotiertem Zinnoxid aufweisen.

5. Kornartiger Füllstoff nach einem der vorangegangenen Ansprüche,
**dadurch gekennzeichnet, dass**
die Trägerkörner Aluminiumsilikat, Glasfasern, Wollastonit, Glimmer, Katziumkarbonat und/oder Talkum sind.

6. Kornartiger Füllstoff nach einem der vorangegangenen Ansprüche,
**dadurch gekennzeichnet, dass**
der Masseanteil der elektrisch leitfähigen Pigmente in einem Bereich von 1,5 bis 2,5 Ma% liegt.

7. Kornartiger Füllstoff nach einem der vorangegangenen Ansprüche,
**dadurch gekennzeichnet, dass**
der elektrische Pulverwiderstand weniger als 10⁶ Ω * cm beträgt.

8. Kornartiger Füllstoff nach einem der vorangegangenen Ansprüche,
**dadurch gekennzeichnet dass**
das Bindemittel die Farbpigmente an die Oberfläche der Trägerkörner bindet.

9. Kornartiger Füllstoff nach Anspruch 8,
**dadurch gekennzeichnet, dass**
ein auf die Masse der Trägerkörner bezogener Masseanteil des Bindemittels in einem Bereich von 0,5 bis 3 Ma% liegt.

10. Kornartiger Füllstoff nach Anspruch 8 oder 9,
**dadurch gekennzeichnet, dass**
der auf die Masse der Trägerkörner bezogenen Masseanteil des Bindemittels in einem Bereich von 1 bis 2 Ma% liegt.

11. Kornartiger Füllstoff nach einem der Ansprüche 8 - 10,
**dadurch gekennzeichnet, dass**
das Bindemittel ein organisches Polymer ist.

12. Kornartiger Füllstoff nach einem der Ansprüche 8-10,
**dadurch gekennzeichnet, dass**
das Bindemittel eine zweikomponentige Polyurethanmischung ist.

## Claims

1. Granular filler for plastics, adhesives or dyes for increasing the electrical conductivity thereof, comprising a large number of carrier grains, wherein the granular filler has a specific electrical resistance of 10⁹ Ω* cm or less, **characterised in that** each carrier grain consists of quartz and has on its surface an at least partially closed outer layer of electrically conductive pigments in a proportion by mass, based on the mass of the carrier grains, of 0.5 to 6% by mass and a binder for binding the electrically conductive pigments.

2. Granular filler according to claim 1, **characterised in that** the outer layer comprises electrically insulating colour pigments in a proportion by mass, based on the mass of the carrier grains, of up to 4% by mass.

3. Granular filler according to claim 1 or 2, **characterised in that** the electrically conductive pigments at least partially contain titanium dioxide.

4. Granular filler according to claim 3, **characterised in that** the pigments of titanium dioxide at least partially have an outer layer of antimony-doped tin oxide.

5. Granular filler according to one of the preceding claims, **characterised in that** the carrier grains are aluminium silicate, glass fibres, wollastonite, mica, calcium carbonate and/or talc.

6. Granular filler according to one of the preceding claims, **characterised in that** the proportion by mass of the electrically conductive pigments lies in a range from 1.5 to 2.5% by mass.

7. Granular filler according to one of the preceding claims, **characterised in that** the electrical powder resistance is less than 10⁶ Ω* cm.

8. Granular filler according to one of the preceding claims, **characterised in that** the binder binds the colour pigments to the surface of the carrier grains.

9. Granular filler according to claim 8, **characterised in that** a proportion by mass of the binder, based on the mass of the carrier grains, lies in a range from 0.5 to 3% by mass.

10. Granular filler according to claim 8 or 9, **characterised in that** the proportion by mass of the binder, based on the mass of the carrier grains, lies in a range from 1 to 2% by mass.

11. Granular filler according to one of claims 8 to 10, **characterised in that** the binder is an organic polymer.

12. Granular filler according to one of claims 8 to 10, **characterised in that** the binder is a two-component polyurethane mixture.

## Revendications

1. Charge granulaire pour matériaux synthétiques, colles ou peintures, destinée à augmenter leur conductivité électrique, avec une pluralité de grains porteurs, la charge granulaire présentant une résistance électrique spécifique de 10⁹ Ω * cm ou inférieure, **caractérisée en ce que** chaque grain porteur est constitué de quartz et présente à sa surface une couche d'enveloppe au moins partiellement fermée, constituée de pigments électriquement conducteurs ayant une fraction massique, par rapport à la masse des grains porteurs, de 0,5 à 6 % en masse, et d'un liant pour assurer la cohésion des pigments électriquement conducteurs.

2. Charge granulaire selon la revendication 1, **caractérisée en ce que** la couche d'enveloppe présente des pigments colorés isolants au plan électrique, ayant une fraction massique pouvant atteindre, par rapport à la masse des grains porteurs, jusqu'à 4 % en masse.

3. Charge granulaire selon la revendication 1 ou 2, **caractérisée en ce que** les pigments électriquement conducteurs contiennent, au moins en partie, du dioxyde de titane.

4. Charge granulaire selon la revendication 3, **caractérisée en ce que** les pigments de dioxyde de titane présentent, au moins en partie, une couche d'enveloppe d'oxyde d'étain dopé à l'antimoine.

5. Charge granulaire selon l'une quelconque des revendications précédentes, **caractérisée en ce que** les grains porteurs se composent de silicate d'aluminium, de fibres de verre, de wollastonite, de mica, de carbonate de calcium et/ou de talc.

6. Charge granulaire selon l'une quelconque des revendications précédentes, **caractérisée en ce que** la fraction massique des pigments électriquement conducteurs se situe dans une plage de 1,5 à 2,5 % en masse.

7. Charge granulaire selon l'une quelconque des revendications précédentes, **caractérisée en ce que** la résistance électrique de la poudre est inférieure à 10⁶ Ω * cm.

8. Charge granulaire selon l'une quelconque des revendications précédentes, **caractérisée en ce que** le liant assure la cohésion des pigments colorés à la surface des grains porteurs.

9. Charge granulaire selon la revendication 8, **caractérisée en ce qu'**une fraction massique du liant se situe, par rapport à la masse des grains porteurs, dans une plage de 0,5 à 3 % en masse.

10. Charge granulaire selon la revendication 8 ou 9, **caractérisée en ce que** la fraction massique du liant se situe, par rapport à la masse des grains porteurs, dans une plage de 1 à 2 % en masse.

11. Charge granulaire selon l'une quelconque des revendications 8 à 10, **caractérisée en ce que** le liant est un polymère organique.

12. Charge granulaire selon l'une quelconque des revendications 8 à 10, **caractérisée en ce que** le liant est un mélange de polyuréthannes à deux composants.
